(19)

**Europäisches Patentamt**

**European Patent Office**

**Office européen des brevets**

(11) **EP 4 624 071 A1**

(12) **EUROPEAN PATENT APPLICATION**

(43) Date of publication:
01.10.2025 Bulletin 2025/40

(21) Application number: 24166423.4

(22) Date of filing: 26.03.2024

(51) International Patent Classification (IPC):
*B22F 1/062* (2022.01)    *B22F 3/00* (2021.01)
*B22F 3/10* (2006.01)    *B22F 9/08* (2006.01)
*C25B 11/031* (2021.01)    *C25B 11/037* (2021.01)
*H01M 4/38* (2006.01)    *H01M 4/62* (2006.01)
*H01M 4/66* (2006.01)    *H01M 4/74* (2006.01)
*H01M 4/80* (2006.01)    *H01M 8/0232* (2016.01)
*B22D 11/06* (2006.01)    *B22D 23/00* (2006.01)

(52) Cooperative Patent Classification (CPC):
B22F 1/062; B22D 11/0642; B22D 23/003;
B22F 3/002; B22F 3/10; B22F 9/08; C25B 11/031;
C25B 11/037; H01M 4/0471; H01M 4/382;
H01M 4/806; H01M 10/0525

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Max-Planck-Gesellschaft zur
Förderung der
Wissenschaften e.V.
80539 München (DE)**

(72) Inventors:
• **Spatz, Joachim**
  **70569 Stuttgart (DE)**
• **Baumann, Manuel**
  **70569 Stuttgart (DE)**
• **Möller, Martin**
  **70569 Stuttgart (DE)**

(74) Representative: **Manitz Finsterwald
Patent- und Rechtsanwaltspartnerschaft mbB
Martin-Greif-Straße 1
80336 München (DE)**

(54) **METAL FIBER**

(57) The present invention relates to a metal fiber having an anisotropic surface texture, comprising: a first end region on a first end of the metal fiber having a smooth surface; and a second end region on a second end of the metal fiber having a non-smooth surface.

EP 4 624 071 A1

## Description

The present invention concerns metal fibers having an anisotropic surface texture. Specifically, the present invention concerns metal fibers having two ends which differ in regard to their surface texture, in particular their roughness, wherein one end can be a pinnate end.

Metal fibers have shown to be useful in various fields, such as battery electrodes, filters or as electromagnetic shielding, as described for example in WO 2020/016240 A1. While the existing fibers are a big step forward, there remains room for improvement in regard to the fiber's surface region and their processability. Previously described fibers were obtained by melt spinning or bundle drawing and require a cutting step to be brought into a length suitable for the formation of nonwoven fiber networks. Further, it was found that these prior art fibers have a closed surface essentially along their entire length. There is room for improvement of the fiber performance by further increasing their surface area. While making the fibers thinner and flatter may further increase their surface area, there is a certain limitation regarding these parameters in regard to mechanical and electrical resilience of the metal fibers. If the fibers become too thin, there is a risk that they burn through during operation as a battery electrode or during other electrochemical applications. If used as a filter or as a catalyst material or carrier, a fluid flowing through a layer of such fibers may break the fibers and disintegrate the network.

Therefore, another strategy is required to increases the fiber performance without sacrificing mechanical strength or electrochemical resilience.

The solution found by the present inventors are metal fibers as described herein.

The present invention relates to a metal fiber according to claim 1, specifically, to a metal fiber having an anisotropic surface texture, comprising: a first end region on a first end of the metal fiber having a smooth surface; and a second end region on a second end of the metal fiber having a non-smooth surface.

In the context of this invention, a non-smooth surface region of a fiber is defined herein as a fiber showing an irregular texture in regard to edges and/or surface, such as jagged edges or a porous structure. Correspondingly, a smooth fiber surface region is one having a regular texture in regard to edges and/or surface. Examples of such smooth and non-smooth surfaces are shown in the drawings.

The metal fiber of the present invention has two ends which differ in their surface texture. The first end region has a smooth surface and the second end region has a non-smooth surface, such as a texture with jagged edges and/or a porous structure. Herein the non-smooth surface refers to a surface which has more irregularities in comparison to the smooth surface of the first end region. Irregularities, i.e. a non-smooth surface, can be in the form of jagged fiber edges and/or a porous structure and/or a frayed structure and/or a pinnate structure.

In contrast, a smooth surface of the fiber's first end region is given, when the surface is closed and free of through holes. The smooth surface end region can also have some surface irregularities, but these are less expressed than in the second end region. Actually, the fiber can also be denoted as an irregular pinnate structure with the first end region forming a stem, like it is characteristic for natural growth structures. At the first end region a certain amount of metal material is provided, which allows to form a strong connection e.g. to another metal fiber or to a current collector or to a holding frame, whereas the second end is provided with an increased surface area. While the first end region already provides a high surface area, the non-smooth surface of the second end region even further increases the surface area of the metal fiber. By combining the two surface textures within a single fiber, the fibers can be fixed securely via the smooth surface end region and make use of even further increased functionality via their non-smooth surface end region. Further, the non-smooth surface texture can provide for an even reduced weight of the fiber, allowing higher volumetric capacities for different applications, such as active electrode materials, catalytic centers, filter capacities, cell-adhesion sites, or allows for weight reduction for example in electromagnetic shielding in the aviation industry or space industry.

Further, the present invention relates to a plurality of metal fibers according to claim 8, specifically, to a plurality of metal fibers, wherein at least 1%, in particular at least 50%, in particular at least 90% of the metal fibers are metal fibers according to the present invention, as defined by claim 1.

Herein "a plurality of metal fibers" refers to an agglomeration of multiple metal fibers. The number of metal fibers involved is not limited and is in particular more than 10, further in particular more than 50, and can be 100 or higher. The amounts of 1%, 50%, 90% mentioned above refer to the number of the specific metal fibers of the present invention relative to the total number of metal fibers. For example, "at least 50% of the metal fibers are metal fibers according to the present invention, as defined by claim 1" specifies that half of the number of metal fibers or more are metal fibers according to the present invention, as defined by claim 1.

While the above described advantages of the metal fiber of the present invention with two different surface textures is already provided by the individual fiber, a combination of a plurality of fibers provides several advantages, such as the formation of a flexible network or of a non-woven of such metal fibers by a plurality of metal fibers. In such a plurality of metal fibers, the beneficial effects of the anisotropic surface texture can be obtained by including already a small amount of the metal fiber of the present invention. Nevertheless, it is preferred when the amount of the metal fiber of the present invention is higher in order to better achieve the advantageous properties. The amount of the metal fibers according to the present invention, as defined by claim 1, in the plurality of metal fibers can preferably be at least 90% and is in a most preferred embodiment at least 95% and may be even 100%. Also these %-values refer to the number of specific metal fibers of the invention relative to the total number of metal fibers. In some embodiments it may be advantageous to blend in some metal fibers of a different kind, e.g. to provide increased mechanical stability or electrical resilience to the plurality of metal fibers.

In addition, the present invention relates to a method according to claim 9, specifically to a method for producing a metal fiber, specifically it relates to a method for producing a metal fiber or a plurality of metal fibers according to the present invention, the method comprising the steps of: directing molten metal through a nozzle having a nozzle direction in a deposition direction at a regulated pressure difference between the inside and the outside of the crucible; depositing said molten metal from said nozzle on a rotating planar surface having an axis of rotation; entraining said molten metal in one plane about said axis of rotation via said rotating planar surface to form metal fibers, wherein said rotating planar surface is aligned at an alignment angle with regard to the deposition direction during the entraining of the molten metal; cooling said metal fibers to form solidified metal fibers; and guiding said metal fibres to collecting means to collect the solidified metal fibres formed on the rotating planar surface, wherein the rotating surface has a structured surface onto which the molten metal material is deposited, wherein the rotating planar surface onto which the molten metal is deposited is structured, in particular with a plurality of elevations or indentations, preferably in the form of ridges or grooves extending in a radial direction of the rotating planar surface.

By using rotating planar surfaces which are aligned at an alignment angle with respect to the deposition direction instead of for example circumferential surfaces, the time the metal can take to cool down and solidify can be increased substantially. Namely, the molten metal has longer contact times with the planar surface and can therefore cool down to lower temperatures before leaving the surface again. This also leads to the possibility of forming metal strands of greater length to width ratio as was previously possible. Moreover, this also leads to less damage of the surface on the first end side of the metal fiber, since the metal can solidify properly before leaving the surface. Herein, the rotating planar surface refers to a surface extending in a radial direction of the rotation, i.e. it does not extend in the circumferential direction. The rotating planar surface rotates in a plane, it does not mean that the rotating planar surface itself is entirely plane. The method of the present invention for producing a metal fiber, in particular a plurality of metal fibers is an improvement of previously described melt spinning technology, such as disclosed in EP3941663A1, the entire content of which is incorporated herein by reference. The structures provided on the rotating planar surface rupture the molten metal which causes two effects. Firstly, the length of the metal fibers is controlled due to the rupturing. Thereby, a homogenous size distribution, in particular a homogenous length distribution, can be obtained directly from the melt spinning process without requiring an additional cutting step. Thereby productivity of the metal fibers, in particular of preparing subsequent products, such as layers of metal fibers is improved. Secondly, when the structures rupture the molten metal, a part of the molten metal is subjected to strong forces, resulting in a non-smooth surface texture at the second end of the metal fiber. Thereby, the special structure of the metal fiber of the present invention is obtainable.

Moreover, the present invention relates to a plurality of metal fibers obtainable by the method for producing a metal fiber or a plurality of metal fibers according to the present invention. As described already above in the context of the method and of the individual fibers, the fibers obtainable by the method disclosed herein have a specifically structured surface texture that could not be obtained by previous methods. This specific surface structure has preferably a first end region with a smooth surface and a second end region with a non-smooth surface.

According to another aspect, the present invention relates to the use of the plurality of metal fibers of the present invention for electromagnetic shielding, in particular for lightweight constructions, such as in aviation industries and space industries, including air planes, satellites, space vehicles; filters; electrodialysis; electrolysis; medical products; cellular agriculture; single layer and multilayer electrodes for batteries, fuel cells; or in catalysis.

Electromagnetic shielding is of particular interest, especially in the field of lightweight constructions. To achieve a weight reduction, lightweight constructions often replace metallic materials by non-metallic lightweight materials, such as plastics or carbon fiber composites. While these non-metallic materials are often lighter than their metallic counterparts, they often have not a sufficient electric conductivity in order to form a cage for electromagnetic shielding. Adding the metal fibers of the present invention into such lightweight materials allows to obtain an electromagnetic shielding effect without a drastic increase of the lightweight materials weight. Further, the metal fibers may even act as reinforcing structures inside these lightweight materials. In this context, the non-smooth surface texture of the second end region of the metal fibers can be helpful in having a strong bond between the bulk material of the lightweight material and the metal fibers.

When being utilized in filters, the metal fibers having the non-smooth surface area can provide for additional turbulences of a fluid flowing through the filter, thereby improving the performance of the filter without weight increase.

Electrodialysis and electrolysis can be used for example for desalination of water. Significant cost driving factors thereby are the costs for anodes and cathodes as well as for anode and cathode porous transport layers. Metal fibers of the present invention are suitable for such applications to form anodes and cathodes but also anode and cathode porous transport layers.

Porous or fibrous structures are utilized in medical products for promoting for example cell growth. Fibers of the present invention provide for a very large surface area, in particular due to the second end region being non-smooth. Thereby adhesion and growth of cells, such as bone cells, skin cells, muscle cells or other tissue cells is promoted by these metal fibers. For the same reason, metal fibers of the present invention are suitable as scaffolds for cell growth in cellular agriculture, in particular when the metal fiber is of a degradable material, such as magnesium.

The combination of high surface area on one side of the fiber and stability from the other side of the fiber makes these fibers also useful in electrodes for batteries and fuel cells.

Further, the specific surface texture of these metal fibers is advantageous for catalytic processes. The high surface area especially due to the non-smooth surface at the second end region allows for higher performances. The solid smooth first end region of the metal fibers in turn allows for a stable bonding, e.g. to a frame or other holder. Thereby the fibers can be protected from being carried away for example by a reactant flow. Similarly, as mentioned for the filter, the non-smooth texture may induce turbulences in a fluid flowing through a layer of metal fibers, thereby mass transfer and heat transfer can be improved.

Additionally, the present invention concerns a method of producing an electrode as defined in claim 15. Specifically, in the method of producing an electrode a layer of the plurality of metal fibers according to the invention is provided, wherein the layer has a thickness which is 3 or more times the average thickness of a metal fiber from the plurality of metal fibers. This layer is then filled with an active material. Following this procedure, a stable layer of a plurality of metal fibers, either thin or thick, can be processed by using conventional processing techniques, such as calendering, in particular when it is a thin layer. Such thin electrodes can be used as direct replacements of existing metal foil-based electrodes, while providing significant higher volumetric energy densities.

Preferred embodiments if the invention are the subject-matter of dependent claims and described in the following.

Preferably, in the metal fiber according to the present invention the first end region having a smooth surface extends for at least 10 $\mu$m from the first end of the metal fiber into the direction of the second end of the metal fiber. Thereby, a certain minimum region of the metal fiber is provided with a smooth surface. The smooth surface indicates further a solid metal fiber region, i.e. one which is not deprived of metal material due to pores and surface irregularities. In this context, the first end region having the smooth surface extends more preferably for at least 100 $\mu$m, more preferably for at least 300 $\mu$m, even more preferably for at least 5000 $\mu$m, even further more preferably for at least 10000 $\mu$m. The presence of such a solid end region allows to connect the fiber either to other fibers or to other holding structures, e.g. a frame. While this is beneficial for some applications, it is not necessary in every case.

Further, it is preferred when the second end region extends for at least 30 $\mu$m from the second end of the metal fiber into the direction of the first end of the metal fiber. Thereby, a certain minimum region of the metal fiber is provided with a non-smooth surface, allowing to better achieve the beneficial effects mentioned above associated for example with the increased surface area. In this context, the second end region having the smooth surface extends more preferably for at least 100 $\mu$m, more preferably for at least 200 $\mu$m, even more preferably for at least 400 $\mu$m, even further more preferably for at least 2000 $\mu$m. The presence of such a non-smooth end region increases the surface area and can provide advantageous impacts on fluids flowing past such a fiber. While the described minimum lengths of the non-smooth region are beneficial for some applications, they are not necessary in every case.

According to a particularly preferred embodiment, the metal fiber of the present invention has a length in the range of 0.30 mm to 100.00 mm. More preferably the length is in the range from 0.90 to 30.0 mm, even more preferably in the range from 1.0 to 25.0 mm, most preferably in the range of 2.0 to 20.0 mm. Herein the length of a metal fiber is defined as the extension of the metal fiber along its spine from one end to the other end. The metal fiber may be curled, in such a case, the direct end-to-end distance may be significantly shorter than the length along the metal fiber's spine. It was surprisingly found that a metal fiber having a length as indicated above, processability is significantly improved, in particular when the metal fiber is in an agglomerate of a plurality of metal fibers. Further, it was found that a non-woven prepared from such a plurality of metal fibers having the indicated lengths can be obtained in a much more uniform manner compared to longer metal fibers, allowing for improved performances especially when it comes to filters, electrodes, catalysis, cell growth and electromagnetic shielding. With metal fibers having a length of less than 0.30 mm, it may become difficult to provide a stable non-woven.

According to yet another preferred embodiment, the metal fiber has at least in the first end region a ribbon-like shape which extends in particular to at least the middle of the entire length of the fiber. A ribbon-like shape is defined as a geometric form characterized by a significantly greater length and width compared to its thickness, resembling a strip or band of material. The middle of the entire length is defined as half the distance between the first end and the second end of the fiber along a path following the fiber's spine. The ribbon like shape, in particular at the first end region, allows two adjacent fibers to contact each other over a significantly larger area compared to fibers having a round cross-section. Thereby, a bonding of adjacent fibers, e.g. by sintering or plating, is facilitated. Moreover, the ribbon-like shape increases the fiber's surface area also in the first end region. The ribbon-like shape preferably extends along the fiber's backbone from the first end until to the beginning of the second end region, where the fibers texture becomes non-smooth.

According to a preferred embodiment of the present invention, the width of the ribbon-like shaped metal fiber is, at least in the ribbon-liked shaped region thereof, in a range of 3 $\mu$m to 300 $\mu$m. More preferably, the width is in the range of 10 to 200 $\mu$m, even more preferably in a range from 15 to 150 $\mu$m, even further more preferably in a range from 20 to 100 $\mu$m. With such a width, the effects associated with the first end region, in particular mechanically stable bonding and holding to a frame as well as increasing the surface area at least to a certain extent, can be suitably achieved.

According to another preferred embodiment, the thickness of the ribbon-like shaped metal fiber is, at least in the ribbon-liked shaped region thereof, in the range of 0.50 $\mu$m to 50 $\mu$m. More preferably, the thickness is in the range of 5.0 to 40 $\mu$m, even more preferably in a range from 8.0 to 30 $\mu$m, even further more preferably in a range from 10 to 20 $\mu$m.

In accordance with a particularly preferred embodiment, the thickness and the width are such as specified in the two aforementioned embodiments.

According to a particularly preferred embodiment, the width of the metal fiber is larger than the thickness of the metal fiber, at least in the ribbon-liked shaped region of the metal fiber.

Further, it is preferred when the metal fiber has a reduced thickness and/or width at its second end region. A reduced thickness and/or width refers to a thickness and/or width relative to the thickness and/or width at the first end region, in particular in the ribbon-shaped region. The reduced thickness increases the flexibility of the metal fiber and may result for certain applications in an accelerated biodegradability.

The metal fiber of the present invention is not limited to specific materials. Nevertheless, for some applications, it is preferable for the metal fiber to be based on magnesium, aluminum, titanium, nickel, copper or aluminum. "Based on" as mentioned herein means that the primary material composition of the metal fiber is magnesium, aluminum, titanium, nickel, copper or aluminum, potentially including minor quantities of other elements or compounds to achieve desired properties. Accordingly, also alloys in which any of these metals is the primary material, are encompassed. The primary material is the material which is included in the highest weight ratio, relative to the total weight of all the other components.

According to a preferred embodiment, the metal fibers form a non-woven and are bonded to one another, in particular through sintering, electrolytically or through electroless deposition. Due to the bonding in combination with the solid fiber structure at the first end region of the fiber, a mechanically strong network of metal fibers is provided. Further preferably, the individual fibers are electrically coupled by the bonding, thereby a highly conductive metal fiber network is provided. Even further preferably, the bonding does not utilize any organic binder. By direct metallic bonding of the metal fibers, a particularly high mechanical strength and electric conductivity is achieved. The bonding may be achieved as described in WO 2020/016240 A1, the entire content of which is incorporated herein by reference. Specifically, the features described in WO 2020/016240 A1 for the individual metal fibers in regard to their thermodynamic non-equilibrium, their production, their material composition and their dimensions are applicable to the metal fiber of the present invention, specifically to the first end region of the metal fibers of the present invention.

While the metal fiber of the present invention and in particular the plurality of metal fibers of the present invention is preferably produced by the inventive method described herein, they may also be obtainable by other means. For Example, metal fibers, such as those described in WO 2020/016240 A1 or in EP3941663A1, have no end region with a non-smooth surface. The prior art metal fibers have two identical end regions both with smooth surfaces. It is possible to take such a prior art metal fiber and to roughen one end region thereof in order to obtain a metal fiber according to the present invention. However, such a process has never been described, since it is extremely cumbersome. A much more efficient way for producing metal fibers, in particular a plurality of metal fibers, in accordance with the present invention is the method described herein, which is based on a melt spinning process utilizing rupturing structures on the rotating planar surface.

In accordance with a preferred embodiment of the method for producing a metal fiber, in particular a plurality of metal fibers, two adjacent rupturing structures on the rotating surface form a pair of adjacent structures, such as elevations. In accordance with a particularly preferred embodiment, a distance between such two adjacent structures of the plurality of the structures is substantially equal for all pairs of adjacent structures provided on the rotating surface. Herein substantially equal means that the distance between all of the adjacent structures varies by less than 20% relative to the mean distance of all adjacent structures. This allows for the production of a plurality of metal fibers having a homogenous length distribution. In accordance with another particularly preferred embodiment, there are pairs of adjacent structures provided on the rotating surface with different lengths between the adjacent structures. Specifically, there are two different lengths, which allows for the production of a plurality of metal fibers having a bimodal length distribution; or three different lengths, producing a plurality of metal fibers having a trimodal length distribution. In this context, it is preferred when the rotating surface has pairs of adjacent rupturing structures with two, three, four or five different lengths between the rupturing structures. The rupturing structures can be provided all with the same distance to the center of rotation of the rotating surface or with different distances, in particular so that adjacent rupturing surfaces with a uniform distance therebetween are at a first distance from the center of rotation and adjacent structures with a second distance therebetween are provided at a second distance from the center of rotation, where the second distance is different from the first distance. By combining adjacent rupturing structures with two different distances there between two kinds of fibers are present in the plurality of metal fibers. These two kinds of fibers can differ in their length distribution, but also in their thickness and width. Accordingly, a plurality of metal fibers can be provided with a hierarchical fiber distribution, i.e. with a combination of stronger fibers and finer fibers. The strong fibers can provide mechanical support and electric resilience, wherein the finer fibers can provide for a very high surface area, which can improve performance of a resulting non-woven of metal fibers, as explained already above in the context of the two different fiber ends.

According to an embodiment of the method for producing a metal fiber of the invention the rotating planar surface is arranged, in particular at least approximately, perpendicular to the deposition direction during said steps of entraining and cooling said molten metal. This does not necessarily mean that the rotating planar surface is not perpendicular to the deposition direction during the other steps of the method, but it means that at least during the step of entraining the molten metal the planar surface has to move in a direction perpendicular to the deposition direction in this embodiment. The planar surface can hence for example be designed as planar surface, which rotates in a plane perpendicular to the deposition direction at all times during all steps of the method. The rotating planar surface may be of circular, oval, quadratic or rectangular geometry while its lateral dimensions may range from 1 to 5000cm, in particular between 5 and 400cm or 250cm or 350cm.

According to a further embodiment of the invention the alignment angle of the rotating planar surface is selected to lie in the range of 90° to 1° with respect to the deposition direction and/or the nozzle direction is selected to lie in the range of 0° to 90° with respect to the rotating planar surface. Hence, the rotating planar surface can for example be aligned perpendicular to the deposition direction of the nozzle, wherein the nozzle itself can be aligned at a nozzle direction which is different from 90° with respect to the planar surface. Thus, it can be chosen as necessary with which angle alignment the rotating planar surface and the nozzle as well as its deposition direction are arranged to each other.

According to another embodiment of the invention the moving surface is a base interface of a rotating wheel. This means that the wheel is simply aligned with its base interface facing the nozzle.

Thus, the rotating planar surface rotates around an axis of rotation. When letting the surface rotate around an axis, centrifugal forces can arise. These centrifugal forces can be used in order to "throw" the solidified metal fibers off the moving surface in order to guide them for example to the collecting means. In such a case no further apparatuses for picking up the solidified metal fibers are needed other than e.g. a collector.

A spacing between the nozzle opening and the rotating planar surface may be at least 10 $\mu$m and is typically selected in the range of 10$\mu$m to 20mm, especially of 50, 100 or 200$\mu$m. In this way one can ensure that the molten metal is generally incident perpendicular on the rotating planar surface irrespective of the alignment angle, i.e. the nozzle direction relative to the rotating planar surface. One can also ensure that the molten metal is deposited in the form of drops or as a continuous flow of molten metal onto the rotating planar surface.

The axis of rotation is preferably perpendicular to the rotating planar surface when the rotating planar surface is designed as a base interface of a rotating wheel. Therefore, if the rotating planar surface can rotate for example around an axis of rotation, which is parallel to the deposition direction, e.g. as an axial surface of a wheel rather than the circumferential surface of a wheel as is known in the prior art, the rotating planar surface can be arranged perpendicular to the deposition direction at all times during the method.

It is another embodiment of the invention that a deposition position of the nozzle relative to the rotating planar surface is adjusted relative to the rotating planar surface, for example parallel to and preferably also perpendicular to the rotating planar surface. As an example, if the rotating planar surface is chosen to be a rotating disc, the position of the nozzle can be adjusted radially in order for the user to decide at which point of the disc's radius the molten metal should be deposited. A drop of molten metal, which is deposited nearer to the centre of the disc, experiences a smaller acceleration than a drop, which is deposited farther on the outside of the disc. It is therefore an advantage to be able to decide at which exact point the molten metal should be deposited on the rotating planar surface, since one can hence decide, at which acceleration the molten metal is deposited on the rotating disc and the amount of time during which the metal gets to travel together with the rotating planar surface.

According to another embodiment, the rotating planar surface is cooled, preferably to a temperature lying in the range of 0 to 50°C, especially to room temperature. The rotating planar surface needs to be cooled since the surface is almost constantly in touch with molten, and hence hot, metal and would therefore heat up quite fast. A heated surface would hinder the molten metal to cool down and solidify, which would be contrary to what it should do. Furthermore, with an actively cooled planar surface the gradient of cooling of the molten metal can be controlled and hence reproducible results for the solidified metal fibers can be expected.

It is another embodiment of the invention that the rotating planar surface rotates around an axis of rotation, which is aligned perpendicular to the rotating planar surface. Therefore, the rotating planar surface can be implemented as a disc, a wheel or any other surface which can be moved e.g. in a rotating manner, while being planar at least at a certain time during its rotation.

An advantage of a wheel or disc, which rotates around an axis of rotation which is parallel to the deposition direction is also that a vertical bearing of the wheel has proven to be more stable compared to a horizontal bearing. Hence, the rotation of the disk or the wheel is smoother.

The present invention further concerns nonwoven layers of metal fibers, which can be considered textile structures, and can also be denoted as a fleece. According to a particularly preferred embodiment, the fibers embodied in in the invention within such a nonwoven layer are fixed to each other. The fixation of these fibers can be made by either a binder or adhesive, but is preferably realized by a metallic link, for example by sintering the metal fibers to one another, such as described in EP 3 821 482 B1. In this context, it is particularly preferred that the fibers are in a high energy state before sintering, since it was observed that the connection between these fibers is then stronger. Metal fibers obtainable by the method described herein as part of the invention are obtained by very fast cooling of molten metal, which results in a rapid solidification. Due to the fast solidification, the metal material is conserved in a high energy state, i.e. the metal atoms have not had sufficient time to arrange themselves in a thermodynamically most favored crystalline structure. When such metal fibers are brought in contact to one another and then heated to a suitable temperature, the metal atoms start to rearrange themselves into a thermodynamically more stable configuration. Thereby, a strong connection between contacting metal fibers is formed, which ensures mechanical strength of these interlinks typical for welding and the electrical conductivity across these links as it is specific for the respective metal. The resulting metallic link is stronger than for conventional metal fibers, which do not have the metal atoms conserved in a high energy state.

In the plurality of metal fibers obtainable by the method of the present invention, preferably substantially all of the metal fibers are metal fibers according to any one of claims 1 to 7. Herein substantially all refers to a situation wherein more than 95% of all metal fibers are metal fibers obtainable by the method of the present invention. As explained above, it is possible to add for certain applications individual fibers having different characteristics, in order to improve for example mechanical strength or electric resilience.

The metal fibers included in the plurality of metal fibers preferably have a mean fiber length in the range of 0.30 mm to 100.00 mm. More preferably the length is in the range from 0.90 to 30.0 mm, even more preferably in the range from 1.0 to 25.0 mm, most preferably in the range of 2.0 to 20.0 mm. It was found that by controlling the fiber lengths the fabrication of nonwoven textile like layers of metal fibers is facilitated. It was found that even with comparably short fibers, sufficiently strong networks of metal fibers can be realized. Further, it was found that a non-woven prepared from such a plurality of metal fibers having the indicated lengths can be obtained in a much more uniform manner compared to longer metal fibers, allowing for improved performances especially when it comes to filters, electrodes, catalysis, cell growth and electromagnetic shielding. With metal fibers having a length of less than 0.50 mm, it may become difficult to provide a stable non-woven. Throughout the present disclosure, dimension of the fibers, such as length, width, thickness are measures by image analysis, either from electron microscopy or computer tomography. Statistical values, such as the mean fiber length or a standard deviation thereof refers to an average of fiber lengths measured by image analysis, either from electron microscopy or computer tomography for at least 10 fibers.

In accordance with another embodiment of the present inventions, the metal fibers forming the plurality of metal fibers have a length distribution with a standard deviation of 50% of the mean length or less, in particular 20% of the mean length or less. It was found that with a narrow distribution of fiber lengths, the uniformity of the resulting non-woven or network of metal fibers is improved, allowing for improved performances especially when it comes to filters, electrodes, catalysis, cell growth and electromagnetic shielding.

According to yet another preferred embodiment of the invention, the plurality of metal fibers further comprises an active material. The active material may be deposited onto metal fibers or may be located in the space formed between the metal fibers. The active material can by any active material and is preferably one selected from the group consisting of catalytically active material, electrochemically active material or cytotoxic materials. By adding the active material, the plurality of metal fibers can be functionalized for specific purposes. In particular, the plurality of metal fibers comprises an active material which is an active material for lithium ion batteries or for sodium ion batteries.

In accordance with another preferred embodiment, the plurality of metal fibers is free of any active material. Such an active material free plurality of metal fibers, in particular a non-woven or network of metal fibers, is particularly suitable as electrode and current collector for lithium metal batteries or for sodium metal batteries. An even more preferred embodiment relates to a plurality of metal fibers which are electrically contact with one another, in particular bonded to one another, wherein the fibers are coated with lithium metal. Such a lithium metal coated interconnected network of metal fibers is suitable for electrodes in lithium metal batteries. While it was found that by using networks of sintered metal fiber as electrodes for lithium metal batteries suppresses dendrite growth, the increased surface area at the second end region of the fiber further suppresses the formation and growth of dendrites, thereby increasing lifetime of the lithium metal battery.

As set out above, in a preferred embodiment of the present invention the metal fibers form a non-woven and are bonded to one another, in particular through sintering, electrolytically or through electroless deposition. In accordance with this embodiment of the invention, the non-woven of metal fibers can be either voluminous or a thin layer, such as sheet-like layers. In other word, this embodiment of the invention specifically encompasses two types of non-woven metal fibers, one being voluminous and the other one being sheet-like.

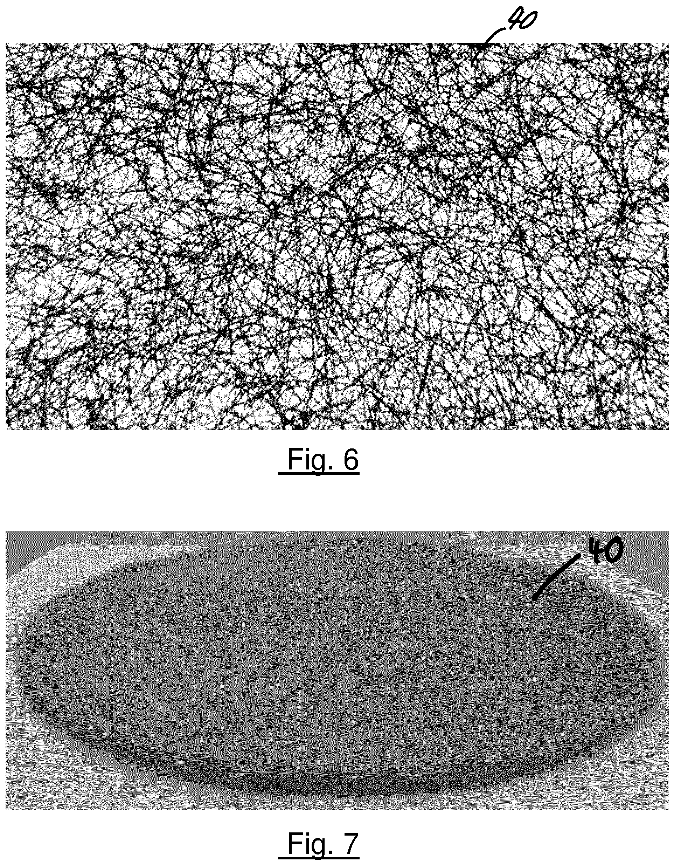

Non-woven metal fiber layers, such as the voluminous one shown in Fig. 7, can be obtained by forming metallic interlinks between fibers, particularly when the fibers are in a high energy state prior to forming these interlinks. The formation of interlinks can be accomplished by applying pressure and increasing temperature, as described in WO 2020/016240 A1, or without pressure by applying a specific heating profile to the fibers, as described in WO 2022/238413 A1. Still the metal fiber's asymmetric structure characterized by two different end regions remains recognizable also from the sintered fiber layers. The density of such a voluminous non-woven metal fiber layer preferably satisfies the following relationship (1):

$$D_{non\text{-}woven} \leq (1/X) \times D_{metal} \qquad (1)$$

In relationship 1 $D_{non\text{-}woven}$ is the density of the non-woven layer of metal fibers, $D_{metal}$ is the bulk density of the metal of the metal fibers and X is in the range of 2 to 10,000, more preferably X is in the range of 10 to 1000 and even more preferably X is in the range of 20 to 400. Variation of the densities of such voluminous non-wovens can be achieved by controlling the fraction of the fibers and their fineness.

In accordance with the sheet-like embodiment of the metal fiber layer, non-woven metal fiber layers, such as the sheet-like one shown in Fig. 6, can also be in a flat and compressed form. Such flat non-woven layers can be prepared from a voluminous non-woven, which can be considered also a fluffy fleece, like the one shown in Figure 7, by pressing or calendering. Preferably, the pressure is chosen to flatten the fibers further, i.e. to deform them. Hence, welding to form the metallic interlinks between the fibers can be done before pressing by thermal treatment as described in WO 2022/238413 A1 or during pressing at an appropriate temperature. Depending on the applied pressure the fibers will get more flattened than in their nascent state, when they are formed by the melt spinning process embodied by this invention. Still their asymmetric structure characterized by two different end regions remains recognizable also from the sintered fiber layers.

Both types of non-woven, i.e. the voluminous one and the sheet-like one, can be used for the applications described herein, in particular for producing electrodes but also for electromagnetic shielding materials or filters.

According to a preferred embodiment of producing an electrode, the layer of the plurality of metal fibers has a thickness of 0.3 times or more and 10000 times or less the average thickness of a metal fiber. In accordance with one embodiment, it is particularly preferred that the layer of metal fiber has a thickness in the range of 0.3 times to 5000 times, more preferably 1 to 300 times even more preferably 2 times to 150 times the average thickness of a metal fiber. The thin sheet-like non-woven metal fiber layers preferably have a thickness in the range of 0.3 times to 20 times, in particular 0.75 times to 15 times the average thickness of a metal fiber. The lower limits mentioned above for the layer of metal fibers of 1 time the thickness and 2 times the thickness of an average fibers applies also to the sheet like non-woven metal fiber layer, having a maximum thickness of 20 times or 15 times an average thickness of a metal fiber. The voluminous non-woven metal fiber layers most preferably have a thickness in the range of 20 times to 10000 times, in particular 25 times to 5000 times the average thickness of a metal fiber. The upper limits mentioned above for the layer of metal fibers of 300 times the thickness and of 150 times the thickness of an average fibers applies also to the voluminous non-woven metal fiber layer, having a minimum thickness of 20 times or 25 times an average thickness of a metal fiber. The average thickness of a metal fiber as denoted herein refers to the thickness of a metal fiber in their nascent state, i.e. before compressing the plurality of metal fibers during sintering.

Such very fine layers are suitable for being processed by conventional electrode making processes, such as described for example in WO 2017/105572 A2 or in WO 2022/064483 A1, the contents of which are incorporated herein by reference. Thereby, the electrodes can be easily integrated into existing battery manufacturing, while benefitting from low production costs, extremely high surface areas and highly homogenous fiber distribution. Further preferably, the thickness of each of the layers is 20 to 750 $\mu$m. According to another preferred embodiment, two or more of the layers, each with a thickness as indicated above, i.e. preferably 0.3 to 20 times an average fiber thickness, are stacked to form the electrode. It is particularly preferred that each of the two or more layers has a thickness of 2 to 750 $\mu$m. When such thin pressed films of non-woven metal fibers are stacked after being coated with active material, an electrode structure is provided, in which the fibers are perfectly electrically connected in the plane, but without metallic connection perpendicular to the planes. In such a case, it may be preferable to have a metallic connection between the layers of metal fibers edges of the layers, at sections that have not been coated with active material. The advantage provided by this embodiment is that the amount of metal in the battery can be significantly reduced and that conventional techniques for construction wound foil batteries can be utilized in combination with one or more thin layers, such as sheet-like layers, of non-woven metal fibers. By stacking two or more layers of such non-woven metal fibers, metal or metal ion transport through several layers is possible, since the layers do not block such transportation as for example a continuous metal foil. The reason therefore is that the non-woven metal fibers are permeable for metal or metal ion transport, whereas conventional foils are impermeable.

The sheet like thin non-woven layers described above can be coated with active material the same way as copper and aluminum foils are coated. This is particularly realized in the form of a roll-to-roll process in combination with dropping the non-woven layers in an active material composition, such as a slurry or powder.

In accordance with yet another preferred embodiment, the layers are filled with active material or coated with lithium metal before being stacked.

Especially when the thickness of the layers is 3 to 100 times, or 3 to 20 times, or 3 to 10 times the average thickness of a metal fiber from the plurality of metal fibers, it is preferable to bond the metal fibers in the layers to one another by applying heat and compression, in particular by calendering. Thereby, the bonding of the metal fibers increases the mechanical strength and the electric conductivity throughout the layer. The bonding process can be easily integrated into existing processes.

In accordance with another preferred embodiment of the method of producing an electrode according to the invention, a voluminous layer of a plurality of metal fibers, in particular a single such layer, is used. This layer has preferably a thickness of 20 times or more, more preferably 50 or more times, even more preferably 100 or more times, even further more preferably 200 or more times the average thickness of a metal fiber from the plurality of metal fibers. The thickness of the metal fiber layer is not restricted to a particular upper value, but can be 10000 times or less the average thickness of a metal fiber. Thereby ultrathick electrodes can be provided which provide for improved electrode performances. When using such a thick layer, the metal fibers are preferably sintered to one another by sintering through the application of heat, in particular without compressing the layer during the sintering process. The layers of voluminous non-woven metal fibers have electric conductivity parallel to the plane surface but also in the thickness direction of the layer. Further, due to the metal fibers extending not only in the planar direction but also in the thickness direction of the layers, ion transport in the thickness direction of the electrode is enhanced. Thereby the electrode performance is improved.

The voluminous non-woven layers described above can be filled with active material in particular by impregnation with a wet slurry or by applying a dry powder active material composition.

Regardless whether a voluminous or a thin-sheet non-woven of metal fibers is used, in accordance with a particularly preferred embodiment, the metal fibers are-fixed to one another by metallic connections before the non-woven is filled with active material. It was found that by this order, i.e. first fixing the fibers to one another and then filling the resulting non-woven with active material, stronger non-woven strucutres can be obtained. When the loose metal fibers are first mixed with active material and then subjected to sintering, it was found that no sufficient bonding between the fibers takes place, but rather the active material can be degenerated during sintering and blocks the contact of the metal fibers to one another, which is necessary for obtaining a strong bond between the metal fibers.

As set out above, the present invention relates also to the use of the plurality of metal fibers of the present invention for electromagnetic shielding, in particular for lightweight constructions, such as in aviation industries and space industries, including air planes, satellites, space vehicles; filters; electrodialysis; electrolysis; medical products; cellular agriculture; single layer and multilayer electrodes for batteries, fuel cells; or in catalysis. In particular when it comes to electromagnetic shielding, it is preferred to have the metal fibers of the present invention within a composite structure, wherein the metal fibers are embedded within a matrix material, such as a polymeric material. According to one embodiment of the present invention, the metal fibers are in such a composite material, wherein the fibers are not in metallic contact with one another. This has turned out to be favorable for shielding electromagnetic frequencies in the GHz range. According to another embodiment of the present invention, the metal fibers are in such a composite material, wherein the fibers are in metallic contact with one another. This has turned out to be favorable for shielding electromagnetic frequencies in the kHz range.

The invention will now be described in further detail by way of example only with reference to the accompanying drawings. In the drawings there are shown:

Fig. 1:      a first embodiment of an apparatus for carrying out the method of producing a metal fiber, in particular a plurality of metal fibers ac-cording to the invention;

Fig. 2A to 2C    images of a metal fiber of the present invention obtained by com-puter tomography;

Fig. 2D      schematic drawing of a metal fiber according to the present inven-tion;

Fig. 3A to 3D    scanning electron microscope images of a plurality of metal fibers according to the present invention;

Fig. 4          fiber length distribution as obtained through computer tomography of a plurality of metal fibers according to the present invention and computer tomography image of said plurality of metal fibers;

Fig. 5A to 5C          photographs of layers of a plurality of metal fibers in accordance with the present invention with different fiber lengths; and

Fig. 6          photograph of layers of a plurality of metal fibers with a narrow fiber length distribution.

Fig. 7          photograph of a voluminous non-woven layer of metal fibers in accordance with the present invention.

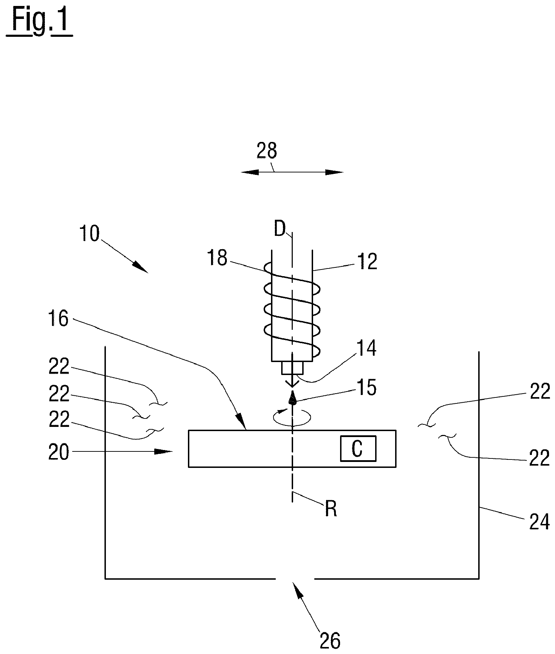

Fig. 1 shows a first embodiment of an apparatus 10 for producing elongate metal strands, in particular a melt spinning apparatus, comprising a nozzle 12 with a nozzle opening 14 which deposits drops or streams of molten metal 15 in a deposition direction (see arrow D) onto a rotating planar surface 16. In order to be able to deposit molten metal, the nozzle 12 comprises a heating device 18 which heats the metal inside the nozzle 12 to a temperature where the metal is in its liquid state.

The nozzle opening 14 may be of any geometry, usually circular, oval, rectangular, quadratic or triangular. The opening width can lie in the range of $10\mu m$ to 10mm, depending on the size of the metal strand 22 or fiber 22 that should be produced. In the case of metal strand 22 production, the width of the nozzle opening 14 is usually chosen from a range of $500\mu m$ to 10mm, whereas in the case of fiber 22 production the width of the nozzle opening 14 is chosen from a range of $10\mu m$ to $500\mu m$. Hence, different nozzle opening 14 sizes are possible depending on the desired application of the apparatus 10. The nozzle direction may vary from 90° with respect to the planar surface 16, i.e. it may be selected to lie in the range from 90° to 0°, in Fig. 1 it is shown as 90°. Hence, the nozzle 12 could also be aligned parallel to the rotating planar surface 16 and still have a deposition direction D which is perpendicular, or any other angle, to the planar surface 16.

The planar surface 16 is located on a wheel 20 which rotates around its axis of rotation R, which is aligned parallel to the deposition direction D. Hence, the planar surface 16 is designed to be the radial surface of the wheel 20. It is noted that the wheel 20 can rotate clockwise as well as counterclockwise. Furthermore, it is noted that the planar surface 16 could also be aligned at an alignment angle with respect to the deposition direction D, wherein the alignment angle A can be selected to lie in the range of 0 to 90°. Additionally, the surface 16 may also comprise an oval, rectangular or quadratic shape. On the surface 16, structures are provided (not shown in the drawings), which can rupture the molten metal and thereby control the fiber length and generate a non-smooth second end region of the fiber 22.

The diameter of the wheel can range from centimeter to meters and the wheel material maybe of any choice which withstands the metal molt deposition and fast rotation speed, in particular metal alloys such as copper, copper alloys, brass, nickel, iron, iron oxide, stainless steel or carbon-based material such as graphite or carbide, ceramic materials. It is also possible that the wheel 20 is a wheel of a base material having a layer made of a metal or of a metal alloy of a ceramic material or of graphite or a vapor deposited carbon, for example a copper wheel 20 having a layer of graphite.

Because of the rotation of the wheel 20, the molten metal drops or streams 15, which come into contact with the surface 16 are entrained and thereby elongated by the wheel 20 to form elongate metal strands 22. These strands 22 remain on the surface 16 until they are cooled down enough to solidify. For this purpose the rotating wheel 20 can be cooled by a cooling device C to for example room temperature or even below by cooling with liquid nitrogen in order for the molten metal drops 15 to be able to solidify to metal strands 22. If the wheel was not cooled at all it would eventually heat up because of its contact with the (hot) molten metal 16 and hence prevent the molten metal 15 to cool down sufficiently to solidify. Heating of the wheel can also affect its mechanical stability. The cooling device C is shown inside the rotatable wheel 20, but it is noted that it does not necessarily have to be located inside the wheel. There are sufficiently many methods known to cool such devices.

Once the metal fibers 22 are solidified the centrifugal forces which act on the metal fibers 22 due to the rotation of the wheel 20 will suffice in order to move the metal fibers 22 away from the planar surface 16. As the adhesion force between the solidified metal fibers 22 and the planar surface 16 is less than a force acting on the metal fibers 22 due to the rotation of the planar surface 16. Thus, the solidified metal fibers 22 fly away from the wheel 20 in a direction transverse to the circumference of the wheel 20.

That is why a collector 24 is arranged in such a way to intercept the solidified metal fibers 22 and guide them to an opening 26 at the bottom of the collector 24 in order to collect the produced metal fibers 22. Guiding of solidified metal fibers 22 may also be possible by a flow of gas inside the melt spinning chamber. Turbulences may affect the collections of metal fibers 22 especially in case of small fibers. This may be prevented by positioning a strong flow of gas or a solid wall which guides the fibers or by evacuating the chamber that no turbulences may occur.

Depending for example on which type of metal is to be molten, the cooling times can differentiate substantially. That is also why the nozzle is adjustable at least parallel to the planar surface (see arrow 28). When using a rotatable wheel 20 it makes sense to use a nozzle which is adjustable in a radial direction of the wheel 20 in order to decide how close to the center of the wheel the molten metal 15 should be deposited. Depending on the deposition position, the molten metal undergoes a different acceleration. For some applications the nozzle 12 can also be adjustable in a direction perpendicular to the planar surface 16.

Although a diameter of the wheel 20 of 20cm to 55cm is preferred this is not critical and wheel diameters in the range from 1 to 100cm can be used. A larger diameter of the planar surface 16 of the rotating wheel 20 increases the circumferential speed of the wheel 20 for outer tracks if the speed of rotation is kept constant and the position of the nozzle 12 relative to the axis of the wheel 20 is changed. Thus a larger diameter of the wheel 20 can result in a smaller width of and shorter length of the metal strands or fibers 22 at constant speed of rotation.

A controller (not shown) can be provided for maintaining the speed of rotation of the wheel 20 constant so that the surface speed of the planar surface 16 lies in the range between 10 to 100 m/s, especially between 30 and 80 m/s, ideally between 40 to 60 m/s at the circumference of the wheel 20 with a wheel 20 of 20cm or lager diameter of the external circumference.

The production of fiber material and metal strands is a combination of the material flow from the nozzle 12 and the speed of rotation of the rotatable wheel 20. If one succeeds in drastically reducing the metal flow from the nozzle 12 then it is also possible to operate with lower speeds of rotation. Accordingly, a speed of rotation of 10 Hz with a wheel 20 of 200mm diameter is also entirely possible provided the amount of molten material 15 discharged from the nozzle 12 is correspondingly reduced.

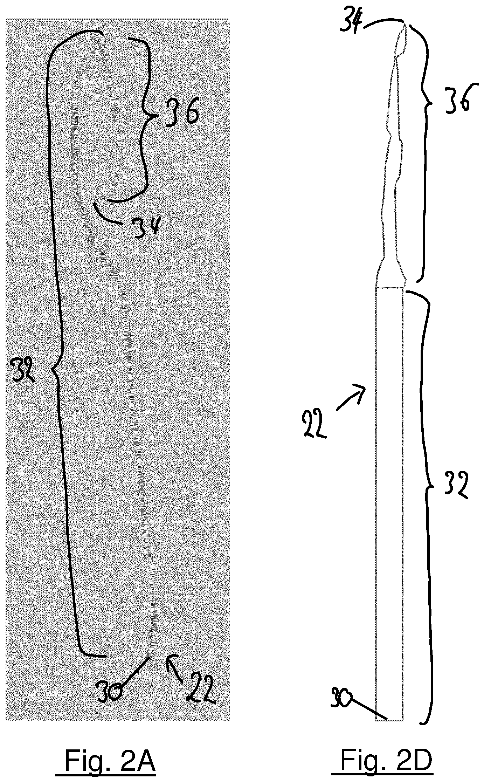

Fig. 2A shows an image of a metal fiber 22 in accordance with the present invention. The image was recorded by computer tomography. The metal fiber has a first end 30 at which a first end region 32 is located and a second end 34, at which a second end region 36 is located. The metal fiber is thinner at the second end region 36 than the first end region 32. In addition, the second end region is lighter in the computer tomographic image compared to the first end region. This is an indication that in the first end region 32 the density of the fiber 22 is higher, so that more metal is available in that region for providing mechanic strength and bonding capability to other fibers or a frame work such as a holder (not shown in the drawings). The specific fiber shown in Fig. 2A changes its direction sharply at the transition from the first end region 32 to the second end region 36. For illustrative purposes, Fig. 2D shows a schematic drawing of a similar fiber 22, wherein the first end region 32 and the second end region 36 extend along the same direction.

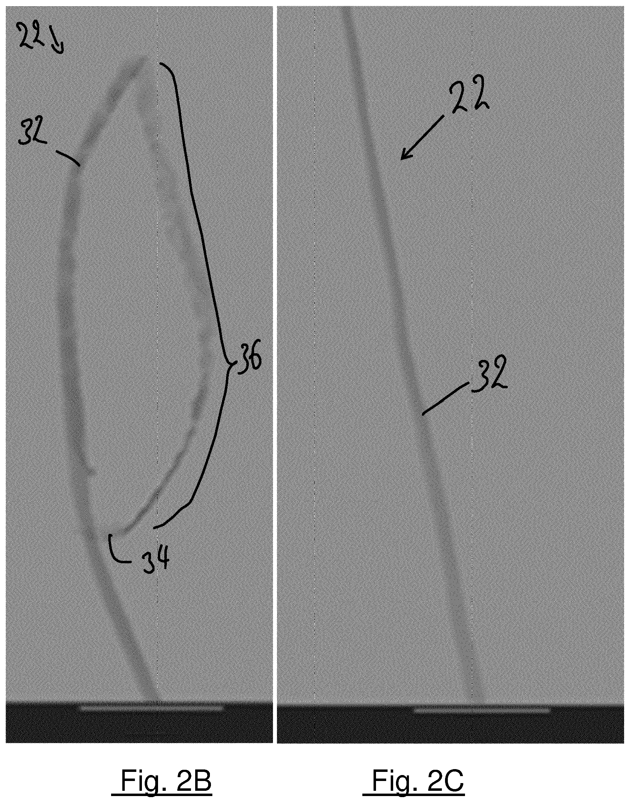

Fig. 2B and Fig. 2C show images of enlarged views of the metal fiber 22 shown in Fig. 2A, also obtained by computer tomography. Scale bars shown in Fig. 2B and Fig. 2C each represent 500 μm. These enlarged views show that the second end region 36 is lighter than the first end region 32, indicating a lower density at the second end region 36. Especially from Fig. 2C it can be recognized that the edges of the metal fiber 22 are parallel to each other and extend in a straight line. This is due to the smooth surface of the metal fiber.

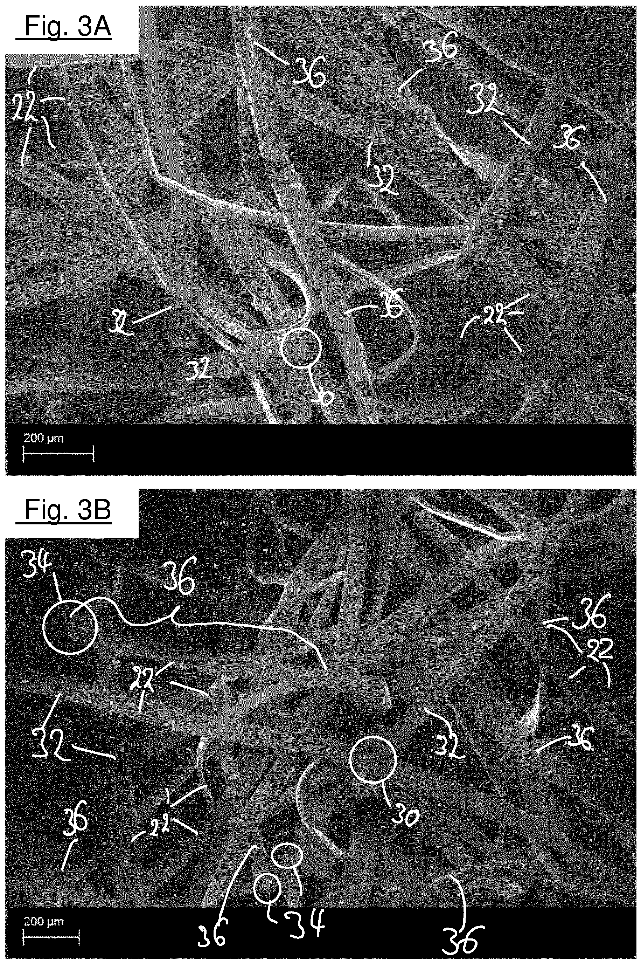

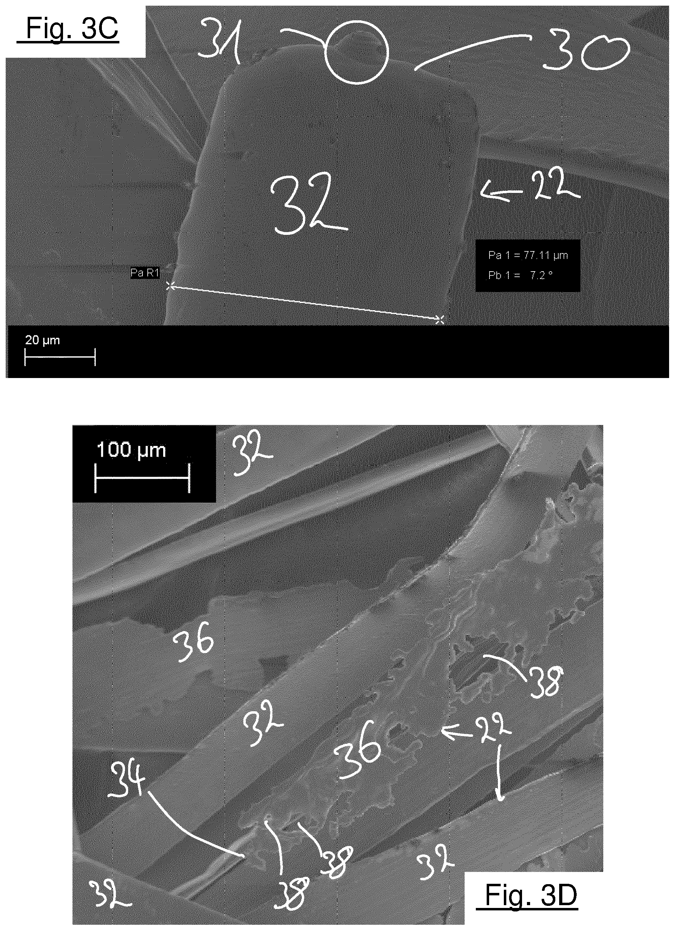

The texture of the metal fibers 22 can be better recognizes from scanning electron microscopy images, shown in Fig. 3A, Fig. 3B, Fig. 3C and Fig. 3D. The scale bar in Fig 3A and 3B indicates a length of 200 μm, in Fig. 3C a length of 20 μm and in Fig. 3D a length of 100 μm, the scale bar in Fig. 3C represents a length of 20 μm and the scale bar in Fig. 3D represents a length of 100 μm. For the sake of having a better overview, not every fiber 22, fiber end 30, 34, fiber end region 32, 36 is identified by a reference sign in these scanning electron microscopy images.

In each of Fig. 3A and 3B first fiber ends 30 are encircled by a white circle. An enlarged view of a fiber first end 30 is shown in Fig. 3C. The first end 30 shows in many cases a nipple 31, which results from the production process by melt spinning. This nipple 31 is generated, when the molten metal 15 hits the rotating planar surface 16. At the first end 30, there is the first end region 32, which has a regular smooth surface. As indicated in Fig. 3C, the fibers 22 at the first end region 31 have a width of around 77 μm. The fibers 22 are in the form of ribbons. From Fig. 3A and 3B, it can be recognized that the ribbon-like shape of the fibers extents along the fiber length until the second end region 36, where the fiber's shape becomes irregular and non-sooth. The edges of the fiber at the second end region are jagged, and even pores are formed in the fiber close to the end 34, which can be best recognized from the enlarged view of Fig. 3D.

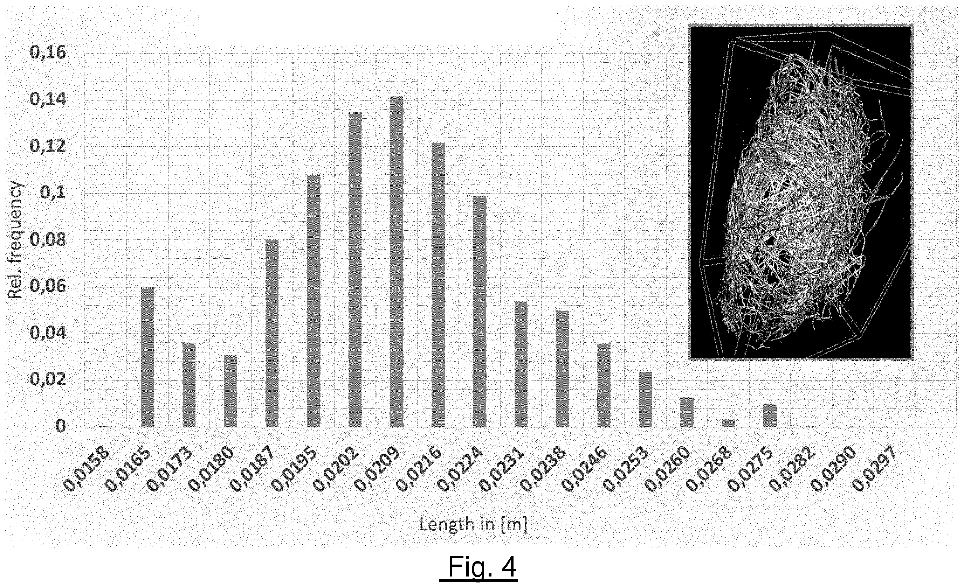

Fig. 4 shows a distribution of fiber lengths for metal fibers as obtained from the melt spinning method described herein, in particular under reference to Fig. 1. The length distribution is from fibers as directly obtained after the melt spinning, without further processing such as sorting or cutting. In Fig. 4, the length is indicated in meters and the relative frequency is an arbitrary unit. The mean fiber length is 0.02235 m, i.e. 2.235 cm. The standard deviation thereof is 0.00282 meters, i.e. 0.282 cm. The fibers as obtained from melt spinning have a narrow lengths distribution. The lengths were obtained from a computer tomographic measurement of a plurality of fibers. A three-dimensional computer tomographic image obtained from the measurement is also shown in the black box in Fig. 4.

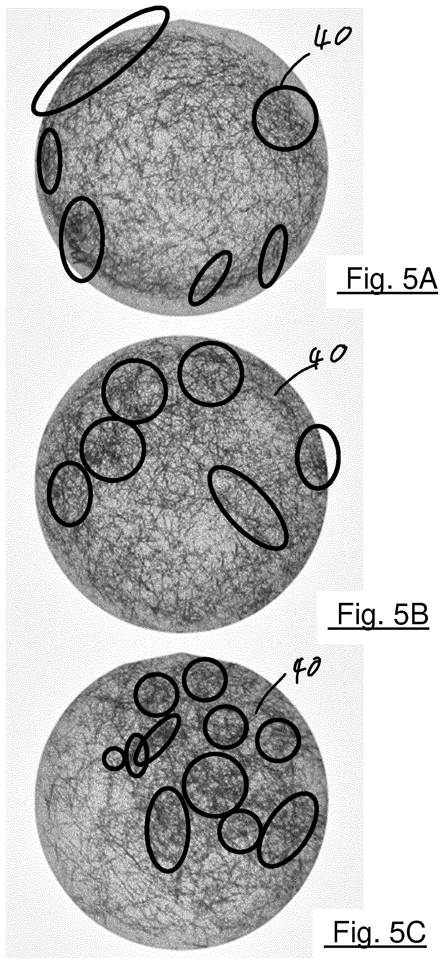

In Fig. 5A to 5C photographs of a layer of a plurality of metal fibers 40 are shown. The layer in each of Fig. 5A to 5C has an area weight of 15 mg/cm². The layers were prepared by deposition from an aqueous dispersion. For the sake of clarity, for the sake of clarity reference signs are omitted in these photographs. The black lines that can be recognized are metal fibers. The metal fibers of Fig. 5A have a mean length of 5 mm, in Fig. 5B, the mean length of the metal fibers is 10 mm and in Fig. 5C the mean length of the metal fibers is 15 mm. In Fig. 5A to 5C accumulations of metal fibers are encircled by black circles. It can be recognized that these accumulations are more frequent for longer fibers of Fig. 5C compared to shorter Fibers of Fig. 5A and Fig. 5B.

A further layer of a plurality of metal fibers 40 in accordance with the present invention is shown in Fig. 6. The mean length of the metal fibers is 11 mm, with an area weight of approximately 15 mg/cm$^2$. The length distribution of the metal fibers is very sharp, i.e. the standard deviation from the mean fiber length is 15% or less. In the layer 40 of Fig. 6 the fibers are very homogenously distributed. The layer shown in Fig. 6 is a thin sheet-like layer of metal fibers.

In Fig. 7 a further photograph of a layer of a plurality of metal fibers in accordance with the present invention is shown. In this case a voluminous layer of copper fibers is shown.

Next, preferred embodiments of the present invention are described.

Embodiment 1. A metal fiber (22) having an anisotropic surface texture, comprising: a first end region (32) on a first end (30) of the metal fiber (22) having a smooth surface; and a second end region (36) on a second end (34) of the metal fiber (22) having a non-smooth surface.

In Embodiment 1, the non-smooth surface refers in particular to a surface which has more irregularities in comparison to the smooth surface of the first end region. Irregularities, i.e. a non-smooth surface, can be in the form of jagged fiber edges and/or a porous structure and/or a frayed structure and/or a pinnate structure. In contrast, a smooth surface of the fiber's first end region is given, when the surface is closed and free of through holes. The smooth surface end region can also have some surface irregularities, but these are less expressed than in the second end region.

Embodiment 2. The metal fiber according to Embodiment 1, wherein the first end region (32) extends for at least 10 $\mu$m, preferably for at least 100 $\mu$m, more preferably for at least 300 $\mu$m, even more preferably for at least 1000 $\mu$m, even further more preferably for at least 5000 $\mu$m, from the first end (30) of the metal fiber into the direction of the second end (34) of the metal fiber (22).

Embodiment 3. The metal fiber according to Embodiment 1 or 2, wherein the second end region (36) extends for at least 30 $\mu$m, preferably for at least 100 $\mu$m, more preferably for at least 200 $\mu$m, even more preferably for at least 400 $\mu$m, even further more preferably for at least 1000 $\mu$m, from the second end (34) of the metal fiber (22) into the direction of the first end (30) of the metal fiber.

Embodiment 4. The metal fiber (22) according to any one of Embodiments 1 to 3, wherein the metal fiber (22) has a length in the range of 0.50 mm to 70.00 mm, preferably from 0.90 to 30.0 mm, even more preferably from 10.0 to 25.0 mm, most preferably from 10.0 to 20.0 mm.

Embodiment 5. The metal fiber (22) according to any one of Embodiments 1 to 4, wherein the metal fiber (22) has at least in the first end region (32) a ribbon-like shape which extends in particular to at least the middle of the entire length of the fiber (22).

Embodiment 6. The metal fiber (22) according to Embodiment 5, wherein the width of the ribbon-like shaped portion of the metal fiber (22) is, at least in the ribbon-liked shaped region thereof, in the range of 5 $\mu$m to 300 $\mu$m, preferably in the range of 20 to 250 $\mu$m, even more preferably in the range of 30 to 150 $\mu$m, even further more preferably in the range of 50 to 100 $\mu$m.

Embodiment 7. The metal fiber (22) according to Embodiment 5 or 6, wherein the thickness of the ribbon-like shaped metal fiber (22) is, at least in the ribbon-liked shaped region thereof, in the range of 1 $\mu$m to 50 $\mu$m.

Embodiment 8. The metal fiber (22) according to any one of Embodiments 5 to 7, wherein the width is larger than the thickness, at least in the ribbon-liked shaped region of the metal fiber (22).

Embodiment 9. The metal fiber (22) according to any one of Embodiments 1 to 8, wherein the metal fiber has a reduced thickness and/or width at its second end region (36).

Embodiment 10. The metal fiber (22) according to any one of Embodiments 1 to 9, wherein the metal fiber is based on magnesium, aluminum, titanium, nickel, copper or aluminum.

Embodiment 11. A plurality of metal fibers (22), wherein at least 1%, in particular at least 50%, in particular at least 90% of the metal fibers are metal fibers (22) according to any one of Embodiments 1 to 10.

Embodiment 12. The plurality of metal fibers (22) according to Embodiment 11, wherein the metal fibers (22) form a non-woven layer (40) and are bonded to one another, in particular through sintering, electrolytically or through electroless deposition.

Embodiment 13. A method for producing a metal fiber (22) according to any one of Embodiments 1 to 10, in particular a plurality of metal fibers according to Embodiment 11 or 12, the method comprising the steps of:

- directing molten metal (15) through a nozzle having a nozzle direction in a deposition direction (D) at a regulated pressure difference between the inside and the outside of the crucible;
- depositing said molten metal (15) from said nozzle (12) on a rotating planar surface (16) having an axis of rotation (R);
- entraining said molten metal in one plane about said axis of rotation (R) via said rotating surface (16) to form metal fibers (22), wherein said rotating surface (16) is aligned at an alignment angle (A) with regard to the deposition direction (D) during the entraining of the molten metal (15);

- cooling said metal fibers (22) to form solidified metal fibers (22); and
- guiding said metal fibers (22) to collecting means to collect the solidified metal fibers (22) formed on the rotating planar surface (16), wherein the rotating planar surface (16) has a structured surface onto which the molten metal material is deposited,

wherein the rotating planar surface (16) onto which the molten metal (15) is deposited is structured with structures, specifically with rupturing structures, in particular with a plurality of elevations or indentations, preferably in the form of ridges or grooves extending in a radial direction of the rotating surface (16).

Embodiment 14. Method according to Embodiment 13, wherein when two adjacent structures form a pair of adjacent structures, such as elevations or indentations, a distance between such two adjacent structures of the plurality of the structures is substantially equal for all pairs of adjacent structures provided on the rotating surface.

Embodiment 15. A plurality of metal fibers (22) obtainable by the method according to Embodiment 13 or 14.

Embodiment 16. The plurality of metal fibers (22) according to Embodiment 15, wherein substantially all of the metal fibers are metal fibers (22) according to any one of Embodiments 1 to 10, and/or wherein the plurality of metal fibers is a plurality of metal fibers according to Embodiment 12.

Embodiment 17. The plurality of metal fibers (22) according to any one of Embodiments 11, 12, 15 and 16, wherein the mean fiber length is in the range of 0.50 mm to 15.0 mm, in particular in the range of 0.90 mm to 12.0 mm, in particular in the range of 1.0 mm to 8.0 mm or in the range of 1.5 mm to 3.5 mm.

Embodiment 18. The plurality of metal fibers (22) according to any one of Embodiments 11, 12 and 15 to 17, wherein the fibers (22) have a length distribution with a standard deviation of 50% of the mean length or less, in particular 20% of the mean length or less.

Embodiment 19. The plurality of metal fibers (22) according to any one of Embodiments 11, 12 and 14 to 18, further comprising an active material.

Embodiment 20. The plurality of metal fibers (22) according to any one of Embodiments 11, 12 and 15 to 18, being free of active material, wherein the metal fibers are preferably coated with lithium metal.

Embodiment 21. Use of a metal fiber according to any one of Embodiments 1 to 10 or of the plurality of metal fibers according to any one of Embodiments 11, 12 and 14 to 20 for electromagnetic shielding, in particular for lightweight constructions, such as in aviation industries and space industries, including air planes, satellites, space vehicles; filters; electrodialysis; electrolysis; medical products; cellular agriculture; single layer and multilayer electrodes for batteries, fuel cells; or in catalysis.

Embodiment 22. Method of producing an electrode, comprising

providing a layer (40) of the plurality of metal fibers (12) according to Embodiment 12, wherein the layer (40) has a thickness which is 3 or more times the average thickness of a metal fiber (22) from the plurality of metal fibers; and
filling of the layer with an active material.

Embodiment 23. Method of producing an electrode according to Embodiment 22, wherein two or more of the layers, each with a thickness which is 0.3 to 20, preferably 0.75 to 15, even more preferably, 1 to 15 times the average thickness of a metal fiber (22) from the plurality of metal fibers (22) are stacked to form the electrode.

Embodiment 24. Method of producing an electrode according to Embodiment 23, wherein the layers are filled with active material before being stacked.

Embodiment 25. Method of producing an electrode according to any one of Embodiments 22 to 24, wherein the metal fibers (22) in the layer (40) are bonded to one another by applying heat and compression, in particular by calendering.

Embodiment 25. Method of producing an electrode according to Embodiment 22, wherein a single layer with a thickness of 20 or more times, preferably 50 or more times, more preferably 100 or more times, even further more preferably 200 times or more the average thickness of a metal fiber (22) is filled with active material.

## Reference signs

| | |
|---|---|
| 10 | apparatus |
| 12 | nozzle |
| 14 | nozzle opening |
| 15 | molten metal |
| 16 | planar surface |
| 18 | heating device |
| 20 | wheel |
| 22 | metal strand / metal fiber |
| 30 | first end |
| 31 | nipple |
| 32 | first end region |
| 34 | second end |
| 36 | second end region |
| 38 | pore |
| 40 | layer of a plurality of metal fibers |

## Claims

**1.** A metal fiber (22) having an anisotropic surface texture, comprising:

> a first end region (32) on a first end (30) of the metal fiber (22) having a smooth surface; and a second end region (36) on a second end (34) of the metal fiber (22) having a non-smooth surface.

2. The metal fiber according to claim 1, wherein the first end region (32) extends for at least 10 $\mu$m, preferably for at least 100 $\mu$m, more preferably for at least 300 $\mu$m, even more preferably for at least 1000 $\mu$m, even further more preferably for at least 5000 $\mu$m, from the first end (30) of the metal fiber into the direction of the second end (34) of the metal fiber (22).

3. The metal fiber according to claim 1 or 2, wherein the second end region (36) extends for at least 30 $\mu$m, preferably for at least 100 $\mu$m, more preferably for at least 200 $\mu$m, even more preferably for at least 400 $\mu$m, even further more preferably for at least 1000 $\mu$m, from the second end (34) of the metal fiber (22) into the direction of the first end (30) of the metal fiber.

4. The metal fiber (22) according to any one of claims 1 to 3, wherein the metal fiber (22) has a length in the range of 0.50 mm to 70.00 mm, preferably from 0.90 to 30.0 mm, even more preferably from 10.0 to 25.0 mm, most preferably from 10.0 to 20.0 mm.

5. The metal fiber (22) according to any one of claims 1 to 4, wherein the metal fiber (22) has at least in the first end region (32) a ribbon-like shape which extends in particular to at least the middle of the entire length of the fiber (22), preferably, wherein the width of the ribbon-like shaped portion of the metal fiber (22) is, at least in the ribbon-liked shaped region thereof, in the range of 5 $\mu$m to 300 $\mu$m, preferably in the range of 20 to 250 $\mu$m, even more preferably in the range of 30 to 150 $\mu$m, even further more preferably in the range of 50 to 100 $\mu$m, and/or wherein the thickness of the ribbon-like shaped metal fiber (22) is, at least in the ribbon-liked shaped region thereof, in the range of 1 $\mu$m to 50 $\mu$m, and/or wherein the width is larger than the thickness, at least in the ribbon-liked shaped region of the metal fiber (22).

6. The metal fiber (22) according to any one of claims 1 to 5, wherein the metal fiber has a reduced thickness and/or width at its second end region (36).

7. The metal fiber (22) according to any one of claims 1 to 6, wherein the metal fiber is based on magnesium, aluminum, titanium, nickel, copper or aluminum.

8. A plurality of metal fibers (22), wherein at least 1%, in particular at least 50%, in particular at least 90% of the metal fibers are metal fibers (22) according to any one of claims 1 to 7, and/or wherein the metal fibers (22) form a non-woven layer (40) and are bonded to one another, in particular through sintering, electrolytically or through electroless deposition.

9. A method for producing a metal fiber (22) according to any one of claims 1 to 7, in particular a plurality of metal fibers according to claim 8, the method comprising the steps of:

> - directing molten metal (15) through a nozzle having a nozzle direction in a deposition direction (D) at a regulated pressure difference between the inside and the outside of the crucible;
> - depositing said molten metal (15) from said nozzle (12) on a rotating planar surface (16) having an axis of rotation (R);
> - entraining said molten metal in one plane about said axis of rotation (R) via said rotating surface (16) to form metal fibers (22), wherein said rotating surface (16) is aligned at an alignment angle (A) with regard to the deposition direction (D) during the entraining of the molten metal (15);
> - cooling said metal fibers (22) to form solidified metal fibers (22); and
> - guiding said metal fibers (22) to collecting means to collect the solidified metal fibers (22) formed on the rotating planar surface (16), wherein the rotating planar surface (16) has a structured surface onto which the molten metal material is deposited,

wherein the rotating planar surface (16) onto which the molten metal (15) is deposited is structured with structures, in particular with a plurality of elevations or indentations, preferably in the form of ridges or grooves extending in a radial direction of the rotating surface (16).

10. Method according to claim 9 wherein when two adjacent structures form a pair of adjacent structures, such as elevations or indentations, a distance between such two adjacent structures of the plurality of the structures is substantially equal for all pairs of adjacent structures provided on the rotating surface.

11. A plurality of metal fibers (22) obtainable by the method according to claim 8 or 9 wherein preferably substantially all of the metal fibers are metal fibers (22) according to any one of claims 1 to 7, and/or wherein the plurality of metal fibers is a plurality of metal fibers according to claim 8.

12. The plurality of metal fibers (22) according to claim 8 or 11, wherein the mean fiber length is in the range of 0.50 mm to 15.0 mm, in particular in the range of 0.90 mm to 12.0 mm, in particular in the range of 1.0 mm to 8.0 mm or in the range of 1.5 mm to 3.5 mm, and/or wherein the fibers (22) have a length distribution with a standard deviation of 50% of the mean length or less, in particular 20% of the mean length or less.

13. The plurality of metal fibers (22) according to any one of claims 8, 11 or 12, further comprising an active material, or
the plurality of metal fibers is free of active material, wherein the metal fibers are preferably coated with lithium metal.

14. Use of a metal fiber according to any one of claims 1 to 7 or of the plurality of metal fibers according to any one of claims 8 or 11 to 13 for electromagnetic shielding, in particular for lightweight constructions, such as in aviation industries and space industries, including air planes, satellites, space vehicles; filters; electrodialysis; electrolysis; medical products; cellular agriculture; single layer and multilayer electrodes for batteries, fuel cells; or in catalysis.

15. Method of producing an electrode, comprising

providing a layer (40) of the plurality of metal fibers (12) according to claim 8 or 11 to 13, wherein the layer (40) has a thickness which is 0.3 or more times the average thickness of a metal fiber (22) from the plurality of metal fibers; and
filling of the layer with an active material, in particular after fixating the metal fibers (12) to one another, further in particular by sintering or electroless deposition.

16. Method of producing an electrode according to claim 15,

wherein two or more of the layers, each with a thickness which is 0.3 to 20, preferably 0.75 to 15, even more preferably, 1 to 15 times the average thickness of a metal fiber (22) from the plurality of metal fibers (22) are stacked to form the electrode, or
wherein a single layer with a thickness of 20 or more times, preferably 50 or more times, more preferably 100 or more times, even further more preferably 200 times or more the average thickness of a metal fiber (22) is filled with active material,
wherein the layers are preferably filled with active material before being stacked.

17. Method of producing an electrode according to any one of claims 15 and 16, wherein the metal fibers (22) in the layer (40) are bonded to one another by applying heat and compression, in particular by calendering.

## Fig.1

Fig. 2A

Fig. 2D

Fig. 2B          Fig. 2C

Fig. 3A

200 µm

Fig. 3B

200 µm

## Fig. 3C

Pa 1 = 77.11 μm
Pb 1 =  7.2 °

Pa R1

20 μm

100 μm

## Fig. 3D

Fig. 4

Fig. 5A

Fig. 5B

Fig. 5C

Fig. 6

Fig. 7

Europäisches
Patentamt
European
Patent Office
Office européen
des brevets

# EUROPEAN SEARCH REPORT

**Application Number**

EP 24 16 6423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2020/229400 A1 (MAX PLANCK GESELLSCHAFT [DE]) 19 November 2020 (2020-11-19) | 1-12,14 | INV. B22F1/062 |
| A | * claims *<br>* page 1, line 23 - page 2, line 12 *<br>* page 8, line 27 - page 9, line 12 *<br>* page 16, line 5 - line 16 *<br>* figure 2 * | 13,15-17 | B22F3/00<br>B22F3/10<br>B22F9/08<br>C25B11/031<br>C25B11/037<br>H01M4/38 |
| X,D | WO 2020/016240 A1 (MAX PLANCK GESELLSCHAFT [DE]; UNIV STUTTGART [DE]) 23 January 2020 (2020-01-23) | 1-8, 12-17 | H01M4/62<br>H01M4/66<br>H01M4/74 |
| A | * claims *<br>* page 8, line 17 - page 9, line 23 *<br>* page 36, line 10 - page 38, line 25 *<br>* page 55, line 27 - page 58, line 5 *<br>* figures * | 9,10 | H01M4/80<br>H01M8/0232<br>B22D11/06<br>B22D23/00 |
| A,D | WO 2017/105572 A2 (ZHAMU ARUNA [US]; JANG BOR Z [US]; NANOTEK INSTRUMENTS INC [US]) 22 June 2017 (2017-06-22)<br>* the whole document * | 1-17 | |
| | | | **TECHNICAL FIELDS SEARCHED (IPC)** |
| A | DE 10 2021 121361 A1 (FRAUNHOFER GES FORSCHUNG [DE]; FREUDENBERG SE [DE]) 23 February 2023 (2023-02-23)<br>* the whole document * | 1-17 | B22F<br>C25B<br>H01M<br>B22D |

The present search report has been drawn up for all claims

| Place of search | Date of completion of the search | Examiner |
|---|---|---|
| The Hague | 10 September 2024 | Morra, Valentina |

EPO FORM 1503 03.82 (P04C01)

## ANNEX TO THE EUROPEAN SEARCH REPORT
## ON EUROPEAN PATENT APPLICATION NO.

EP 24 16 6423

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2024

| Patent document cited in search report | Publication date | Patent family member(s) | | Publication date |
|---|---|---|---|---|
| WO 2020229400 A1 | 19-11-2020 | CN | 113874137 A | 31-12-2021 |
| | | EP | 3941663 A1 | 26-01-2022 |
| | | JP | 7531520 B2 | 09-08-2024 |
| | | JP | 2022532310 A | 14-07-2022 |
| | | KR | 20220007080 A | 18-01-2022 |
| | | US | 2022212252 A1 | 07-07-2022 |
| | | WO | 2020229400 A1 | 19-11-2020 |
| WO 2020016240 A1 | 23-01-2020 | CN | 112740444 A | 30-04-2021 |
| | | EP | 3598526 A1 | 22-01-2020 |
| | | EP | 3821482 A1 | 19-05-2021 |
| | | EP | 4224545 A2 | 09-08-2023 |
| | | ES | 2936626 T3 | 21-03-2023 |
| | | JP | 2021530631 A | 11-11-2021 |
| | | KR | 20210033006 A | 25-03-2021 |
| | | PL | 3821482 T3 | 20-03-2023 |
| | | US | 2021265636 A1 | 26-08-2021 |
| | | WO | 2020016240 A1 | 23-01-2020 |
| WO 2017105572 A2 | 22-06-2017 | CN | 108140786 A | 08-06-2018 |
| | | JP | 7233926 B2 | 07-03-2023 |
| | | JP | 2018530121 A | 11-10-2018 |
| | | KR | 20180063123 A | 11-06-2018 |
| | | US | 2017098856 A1 | 06-04-2017 |
| | | US | 2019363394 A1 | 28-11-2019 |
| | | WO | 2017105572 A2 | 22-06-2017 |
| DE 102021121361 A1 | 23-02-2023 | DE | 102021121361 A1 | 23-02-2023 |
| | | WO | 2023020934 A1 | 23-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020016240 A1
- EP 3941663 A1
- EP 3821482 B1
- WO 2022238413 A1
- WO 2017105572 A2
- WO 2022064483 A1